# EUROPEAN PATENT APPLICATION

(11) **EP 4 327 934 A1**
(43) Date of publication of application: **28.02.2024**
(21) Application number: 22791628.5
(22) Date of filing: 11.04.2022
(51) Int. Cl.: B01J 20/22, A23L 3/3436, B01D 53/14, B01J 20/10, B01J 20/20, B01J 20/32

(54) **OXYGEN ABSORBER**

(30) Priority: 20.04.2021 JP 2021071275
(71) Applicant: MITSUBISHI GAS CHEMICAL COMPANY, INC., Chiyoda-ku Tokyo 100-8324 (JP)
(72) Inventor: SOMEYA, Masao, Tokyo 125-8601 (JP); WATANABE, Keisuke, Tokyo 125-8601 (JP)
(74) Representative: Hoffmann Eitle
(86) International application number: PCT/JP2022/017449
(87) International publication number: WO 2022/224854

(57) **Abstract**

Provided is an oxygen absorber containing: a liquid oligomer of an unsaturated hydrocarbon; a transition metal catalyst; a carrier supporting the liquid oligomer of the unsaturated hydrocarbon and the transition metal catalyst; granular activated carbon; and crystalline thermoplastic resin particles. In an analysis curve derived by subjecting the crystalline thermoplastic resin particles and the granular activated carbon to a pyrolysis-gas chromatography analysis under a pyrolysis condition of 600°C, a ratio [Cref/Pref] of a peak area (Cref) of a decomposition product of a low molecular weight component of the crystalline thermoplastic resin particles adsorbed on the granular activated carbon per unit mass of the activated carbon to a peak area (Pref) of the crystalline thermoplastic resin particle decomposition product per unit mass of the crystalline thermoplastic resin particles is 0.20 or less.

## Description

### TECHNICAL FIELD

The present invention relates to an oxygen absorber.

### BACKGROUND ART

A method of using an oxygen scavenger is known as a storage technique for food products, pharmaceutical products, and the like. In this method, a stored article and an oxygen scavenger are enclosed and sealed in a sealed container having gas-barrier properties, thereby allowing the oxygen scavenger to absorb oxygen inside the sealed container. Thus, an atmosphere in the sealed container can be kept substantially in an oxygen-free state. As a function, the oxygen scavenger is preferably small in size and able to absorb large amounts of oxygen. In other words, an oxygen scavenger composition with a large amount of oxygen absorption per unit volume is preferred.

Exemplary oxygen scavengers include: iron-based oxygen scavengers that include iron (iron powder) as their main agent; and non-iron-based oxygen scavengers that include ascorbic acid, glycerin, and the like as their main agents. Among the non-iron-based oxygen scavengers, unsaturated hydrocarbon compounds, unsaturated fatty acids and derivatives thereof, and unsaturated fatty acid compounds such as fats and oils are known as oxygen absorbers that do not require moisture for oxygen absorption.

Such oxygen absorbers that do not require moisture can be used in the storage of not only foods but also metallic components, electronic components, electrical components, precision components, magnetic and optical components, jewelry, weapons, aircraft, automobiles, glass products, rubber products, photographic films, pharmaceuticals, pressed flowers, paintings, ancient documents, excavated artifacts, and the like.

For example, Patent Document 1 discloses, for the purpose of producing an oxygen-absorbing composition that exhibits a high oxygen-absorbing capability, is easy to produce, and generates minimal gas and odor, an oxygen-absorbing composition composed of an oxygen absorber and a gas absorbing agent, the oxygen absorber having, supported on a carrier, a material containing, as a main agent, an unsaturated group-containing liquid hydrocarbon oligomer having a specific molecular weight and viscosity, and the material also containing an oxygen absorption-promoting substance.

Patent Document 2 discloses an oxygen scavenger produced by adding a solid having a specific heat of fusion and a specific melting point to an oxygen absorber for the purpose of suppressing an increase in temperature and producing a compact oxygen scavenger.

### CITATION LIST

### PATENT DOCUMENT

Patent Document 1: JP 10-113555 A
Patent Document 2: JP 10-130643 A

### SUMMARY OF INVENTION

### TECHNICAL PROBLEM

Patent Document 1 discloses an oxygen-absorbing composition that is an oxygen absorber not requiring moisture and yet exhibiting minimal odor. However, pharmaceuticals, medical supplies, and sanitary products in particular are applied directly to the human body or come into contact with the face for a long period of time, and therefore an oxygen absorber used to store such products and supplies must be odorless on an extremely high level, and is required to have an even higher odorless level than that of the oxygen-absorbing composition disclosed in Patent Document 1. On the other hand, the deoxygenation reaction of the oxygen absorber is an oxidation reaction in which oxygen is absorbed, and is accompanied by the generation of heat. Therefore, when a large amount of an oxygen scavenger is exposed to the atmosphere due to damage to the exterior of a product at the time of disposal or during transportation and storage, heat may be rapidly generated due to the heat storage effect. In addition, the storage environment of pharmaceuticals, medical products, and sanitary products must be strictly controlled, and therefore a higher oxygen absorption property and a suppression in temperature change due to the generation of heat are also required.

Accordingly, an issue to be solved by the present invention is to provide an oxygen absorber that exhibits excellent oxygen absorption performance without requiring moisture and can suppress the generation of both heat and odors.

### SOLUTION TO PROBLEM

The present inventors discovered that this issue can be solved by an oxygen absorber that comprises a liquid oligomer of an unsaturated hydrocarbon, a transition metal catalyst, a carrier, granular activated carbon, and crystalline thermoplastic resin particles and for which the amount of a decomposition product of a low molecular weight component of the crystalline thermoplastic resin particles adsorbed on the granular activated carbon is not more than a specific amount.

The present invention relates to the following oxygen absorber, a method for storing the oxygen absorber, and an oxygen absorber package.
<1> An oxygen absorber containing:
   a liquid oligomer of an unsaturated hydrocarbon;
   a transition metal catalyst;
   a carrier supporting the liquid oligomer of the unsaturated hydrocarbon and the transition metal catalyst;
   granular activated carbon; and
   crystalline thermoplastic resin particles, wherein
   in an analysis curve derived by subjecting the crystalline thermoplastic resin particles and the granular activated carbon to a pyrolysis-gas chromatography analysis under a pyrolysis condition of 600°C, a ratio [Cref/Pref] of a peak area (Cref) of a decomposition product of a low molecular weight component of the crystalline thermoplastic resin particles adsorbed on the granular activated carbon per unit mass of the activated carbon to a peak area (Pref) of the crystalline thermoplastic resin particle decomposition product per unit mass of the crystalline thermoplastic resin particles is 0.20 or less.
<2> The oxygen absorber according to <1>, wherein a thermoplastic resin forming the crystalline thermoplastic resin particles has a melting point of 80 to 150°C and a crystallinity of 60% or higher.
<3> The oxygen absorber according to <1> or <2>, wherein the crystalline thermoplastic resin particles are polyethylene particles.
<4> The oxygen absorber according to any one of <1> to <3>, wherein the granular activated carbon is coconut shell activated carbon.
<5> The oxygen absorber according to any one of <1> to <4>, wherein a mass ratio of the crystalline thermoplastic resin particles to the liquid oligomer of the unsaturated hydrocarbon, that is, a mass ratio of [(crystalline thermoplastic resin particles)/(liquid oligomer of unsaturated hydrocarbon)], is from 0.75/1 to 5/1.
<6> The oxygen absorber according to any one of <1> to <5>, wherein a mass ratio of the granular activated carbon to the liquid oligomer of the unsaturated hydrocarbon, that is, a mass ratio of [(granular activated carbon)/(liquid oligomer of an unsaturated hydrocarbon)] is from 1/1 to 2/1.
<7> The oxygen absorber according to any one of <1> to <6>, wherein a mass ratio of the crystalline thermoplastic resin particles to the granular activated carbon, that is, a mass ratio of [(crystalline thermoplastic resin particles)/(granular activated carbon)], is from 1/1 to 2/1.
<8> The oxygen absorber according to any one of <1> to <7>, wherein the liquid oligomer of the unsaturated hydrocarbon is at least one type selected from the group consisting of a liquid butadiene-based oligomer, a liquid isoprene-based oligomer, a liquid acetylene-based oligomer, and a liquid chloroprene-based oligomer.
<9> The oxygen absorber according to any one of <1> to <8>, wherein the transition metal catalyst is a transition metal salt.
<10> The oxygen absorber according to any one of <1> to <9>, wherein the carrier is porous inorganic particles having a bulk density of 0.6 g/cm³ or less.
<11> The oxygen absorber according to any one of <1> to <10>, wherein the carrier is a silicate.
<12> The oxygen absorber according to any one of <1> to <11>, wherein the carrier is diatomaceous earth.
<13> The oxygen absorber according to any one of <1> to <12>, wherein the low molecular weight component of the crystalline thermoplastic resin particles is substantially not adsorbed on the granular activated carbon.
<14> An oxygen absorber package including the oxygen absorber described in any one of <1> to <13> and an air-permeable packaging material containing the oxygen absorber.
<15> The oxygen absorber package according to <14>, wherein the shape of the air-permeable packaging material is at least one selected from the group consisting of a bag shape, a three-sided seal shape, a four-sided seal shape, a stick shape, a cylindrical shape, and a box shape.
<16> The oxygen absorber package according to <14> or <15>, wherein the air-permeable packaging material is sealed in a gas-barrier container filled with an inert gas.
<17> The oxygen absorber package according to <16>, wherein the pressure in the gas-barrier container is 0.10 MPa or greater.
<18> A method for storing the oxygen absorber described in any one of <1> to <13>, the method comprising:
   sealing, in a gas-barrier container filled with an inert gas, an air-permeable packaging material containing the oxygen absorber; and
   setting the pressure inside the gas-barrier container to 0.10 MPa or higher.

### ADVANTAGEOUS EFFECTS OF INVENTION

The oxygen absorber of the present invention exhibits excellent oxygen absorption performance without requiring moisture and can suppress the generation of both heat and odors. Therefore, the oxygen absorber of the present invention is suitably used particularly in the storage of pharmaceuticals, medical supplies, sanitary supplies, and the like.

### DESCRIPTION OF EMBODIMENTS

An embodiment according to the present invention will be described below. The content of the present invention is not limited to the embodiment described below.

Note that in the present specification, a phrase of "A to B" indicating a numerical range means "greater than or equal to A and less than or equal to B" (in the case of A < B), or "less than or equal to A and greater than or equal to B" (in the case of A > B). Furthermore, in the present invention, a combination of preferable aspects is a more preferable aspect.

### Oxygen Absorber

An oxygen absorber of the present invention includes: a liquid oligomer of an unsaturated hydrocarbon; a transition metal catalyst; a carrier supporting the liquid oligomer of the unsaturated hydrocarbon and the transition metal catalyst; granular activated carbon; and crystalline thermoplastic resin particles. In an analysis curve derived by subjecting the crystalline thermoplastic resin particles and the granular activated carbon to a pyrolysis-gas chromatography analysis under a pyrolysis condition of 600°C, a ratio [Cref/Pref] of a peak area (Cref) of a decomposition product of a low molecular weight component of the crystalline thermoplastic resin particles adsorbed on the granular activated carbon per unit mass of the activated carbon to a peak area (Pref) of the crystalline thermoplastic resin particle decomposition product per unit mass of the crystalline thermoplastic resin particles is 0.20 or less.

### Liquid Oligomer of Unsaturated Hydrocarbon

The oxygen absorber of the present invention contains a liquid oligomer of an unsaturated hydrocarbon. The liquid oligomer of the unsaturated hydrocarbon is supported on a below-described carrier together with the transition metal catalyst.

In the oxygen absorber of the present invention, a liquid oligomer of an unsaturated hydrocarbon is used as a main agent, and oxygen absorption performance is exhibited through an oxidation reaction of the liquid oligomer of the unsaturated hydrocarbon. When the liquid oligomer of the unsaturated hydrocarbon is used as the main agent in the oxygen absorber of the present invention, the oxygen absorber can have an oxygen absorption capability better than unsaturated fatty acids that have been typically used as main agents, such as tung oil and soybean oil.

The liquid oligomer of the unsaturated hydrocarbon that is used in the oxygen absorber of the present invention is preferably at least one selected from the group consisting of a liquid butadiene-based oligomer, a liquid isoprene-based oligomer, a liquid acetylene-based oligomer, and a liquid chloroprene-based oligomer, and is more preferably a liquid butadiene-based oligomer from the perspectives of cost and odor. These liquid oligomers of an unsaturated hydrocarbon are not necessarily required to be a single substance, and may be a mixture of two or more types or may be copolymerized. In addition, a trace amount of impurities such as a solvent mixed in at the time of production is allowed within a reasonable range.

Moreover, the liquid oligomer of the unsaturated hydrocarbon used in the present invention preferably has a carbon-carbon unsaturated bond in the main chain, but may have other substituents in addition to an unsaturated group, such as a halogen group, a hydroxy group, a carbonyl group, an ether group, a carboxy group, or an ester group, within a range that does not impair the effects of the present invention. For example, the liquid oligomer may be substituted with a functional group such as alicyclic hydrocarbon group, an aromatic hydrocarbon group, a hydroperoxy group, an epoxy group, an oxo group, a hydroxymethyl group, an acyl group, an amino group, an imino group, a nitrilo group, a nitro group, a nitroso group, an amide group, an imide group, a cyano group, an isocyano group, a cyanato group, an isocyanato group, a diazo group, an azido group, a hydrazino group, an azo group or a heterocyclic group.

The liquid butadiene-based oligomer is preferably a liquid butadiene oligomer in which 65% or greater of the bonds in the molecular structure are 1, 4-bonds, and such liquid butadiene-based oligomer does not have a side chain and thus has a low viscosity even among liquid butadiene oligomers having the same molecular weight (the bonds in the molecular structure can be measured by nuclear magnetic resonance analysis). In addition, the liquid butadiene-based oligomer is more preferably a liquid butadiene oligomer in which 65% or greater of the 1,4 bonds are 1,4-cis bonds with lower viscosity and of the same molecular weight.

The liquid oligomer of the unsaturated hydrocarbon may be diluted with a non-oxygen-absorbing diluent and then used.

Such a diluent is preferably an organic compound that does not have an easily oxidizable functional group such as an unsaturated group, a hydroxy group, or an aldehyde group and which is mixed with the liquid oligomer of the unsaturated hydrocarbon to reduce the viscosity of the liquid oligomer of the unsaturated hydrocarbon. The non-oxygen-absorbing diluent is not particularly limited as long as the diluent satisfies the above-described conditions, and examples thereof include linear saturated hydrocarbons such as decane, tridecane, tetradecane and n-paraffin; alkylnaphthenes such as liquid paraffin; and naphthenic acid. These non-oxygen-absorbing diluents need not be a single substance, and may be a mixture of two or more substances. The ratio of the non-oxygen-absorbing diluent to the liquid oligomer of the unsaturated hydrocarbon is preferably in a range of 1000 parts by mass or less of the non-oxygen-absorbing diluent per 100 parts by mass of the liquid oligomer of the unsaturated hydrocarbon.

The number average molecular weight of the liquid oligomer of the unsaturated hydrocarbon is preferably from 150 to 4000, more preferably from 300 to 3000, and even more preferably from 500 to 2500.

The viscosity at 25°C of the liquid oligomer of the unsaturated hydrocarbon is preferably from 100 to 4000 mPa·s, more preferably from 150 to 2000 mPa·s, and even more preferably from 200 to 1000 mPa·s.

When the number average molecular weight and the viscosity are in the abovementioned ranges, the oxygen absorber exhibits excellent oxygen absorption performance and is easily produced, and odors can be suppressed.

In the oxygen absorber, the content of the liquid oligomer of the unsaturated hydrocarbon is preferably from 2 to 40 mass%, more preferably from 5 to 30 mass%, and even more preferably from 7 to 20 mass%.

### Transition Metal Catalyst

The oxygen absorber of the present invention contains a transition metal catalyst. In addition, the transition metal catalyst is supported, along with the liquid oligomer of the unsaturated hydrocarbon, on a later-described carrier.

The transition metal catalyst used in the oxygen absorber of the present invention is used to promote oxidation of the liquid oligomer of the unsaturated hydrocarbon and to promote the absorption of oxygen.

The transition metal catalyst is preferably a transition metal salt.

The transition metal salt is preferably at least one transition metal salt selected from the group consisting of Cu, Fe, Co, Ni, Cr and Mn, and is more preferably at least one transition metal salt selected from the group consisting of Mn and Fe in consideration of oxygen absorption performance and safety.

As the transition metal salt, for example, inorganic salts such as sulfates, chloride salts, and nitrates, organic salts such as fatty acid salts and acetylacetone metal salts, and the like can be suitably used, but from the viewpoint of miscibility with the liquid oligomer of the unsaturated hydrocarbon, the transition metal salt is preferably an organic salt, and is more preferably a fatty acid salt. Further, the transition metal catalyst is more preferably contained in the oxygen absorber in a state of being uniformly mixed with the liquid oligomer of the unsaturated hydrocarbon.

The transition metal catalyst may be used by being dissolved or dispersed in a diluent in order to be uniformly mixed with the liquid oligomer of the unsaturated hydrocarbon.

The diluent for diluting such a transition metal catalyst may be the above-mentioned non-oxygen-absorbing diluent or an oil having an unsaturated group, but in order to increase affinity with the liquid oligomer of the unsaturated hydrocarbon and further enhance the oxygen absorption property, an oil having an unsaturated group is preferably used as the diluent.

As the oil having an unsaturated group, an unsaturated fatty acid or an oil or fat containing an unsaturated fatty acid is preferable, and specific examples that can be used include unsaturated fatty acids such as oleic acid, linoleic acid, linolenic acid, arachidonic acid, parinaric acid, dimer acid or ricinoleic acid, and oils and fats containing an ester of these unsaturated fatty acids, such as linseed oil, soybean oil, tung oil, rice bran oil, sesame oil, cottonseed oil, rapeseed oil and tall oil, and also esters and metal salts. As the unsaturated fatty acid, fatty acids produced from vegetable oils and animal oils, such as, for example, linseed oil fatty acid, soybean oil fatty acid, tung oil fatty acid, rice bran oil fatty acid, sesame oil fatty acid, cottonseed oil fatty acid, rapeseed oil fatty acid and tall oil fatty acid, can also be used. Among these, those having a low liquid viscosity are easily mixed and thus are preferable.

The content of the transition metal catalyst in the oxygen absorber is preferably from 0.001 to 0.2 mass%, more preferably from 0.005 to 0.1 mass%, and even more preferably from 0.01 to 0.06 mass%.

The amount of the transition metal catalyst relative to 100 parts by mass of the liquid oligomer of the unsaturated hydrocarbon in the oxygen absorber is preferably from 0.01 to 2.0 parts by mass, more preferably from 0.05 to 1.0 parts by mass, and even more preferably from 0.1 to 0.5 parts by mass.

Moreover, when a diluent is used, the concentration of the transition metal catalyst in the solution containing the diluent is preferably from 1 to 50 mass%, more preferably from 2 to 20 mass%, and even more preferably from 3 to 10 mass%.

### Carrier

The oxygen absorber of the present invention contains a carrier. The carrier supports the liquid oligomer of the unsaturated hydrocarbon and the transition metal catalyst.

The carrier preferably has a large surface area and expands the contact area between the liquid oligomer of the unsaturated hydrocarbon and oxygen. In addition, the carrier preferably has a large pore size, a large pore volume, and a small bulk density because such a carrier can support a large amount of the liquid oligomer of the unsaturated hydrocarbon.

The bulk density of the carrier is preferably 1.0 g/cm³ or less, more preferably 0.7 g/cm³ or less, and even more preferably 0.6 g/cm³ or less. The bulk density is also preferably 0.2 g/cm³ or greater, more preferably 0.3 g/cm³ or greater, and even more preferably 0.4 g/cm³ or greater. Note that the bulk density can be measured in accordance with JIS K6721:1977 (withdrawn), for example.

The carrier is preferably porous inorganic particles, is more preferably porous inorganic particles having a bulk density of 1.0 g/cm³ or less, and is even more preferably porous inorganic particles having a bulk density of 0.6 g/cm³ or less.

Specific examples of the carrier include silicate and wood flour, and silicate is preferable.

The average pore size of the silicate is preferably from 200 to 5000 Å, and is more preferably from 500 to 4000 Å. The average pore size can be measured by the Brunauer-Emmett-Teller (BET) multipoint method or the like using, for example, a commercially available specific surface area/pore distribution measuring device ("BELSORP-Max" available from MicrotracBEL Corp.).

Examples of the silicate having an average pore size of 200 to 5000 Å include diatomaceous earth, zeolite, molecular sieves, sepiolite, cristobalite, porous glass, silica, activated clay, acid clay, and vermiculite, and diatomaceous earth is preferable.

From the perspective of handling ease and filling ease, the average particle size of the carrier is preferably from 0.1 to 5 mm, and is more preferably from 0.5 to 3 mm. The average particle size can be measured by, for example, a commercially available laser diffraction/scattering type particle size distribution measuring device ("LA-960", available from Horiba, Ltd.).

The content of the carrier in the oxygen absorber is preferably from 4 to 50 mass%, more preferably from 10 to 40 mass%, and even more preferably from 14 to 35 mass%.

In the oxygen absorber, the amount of the carrier relative to 100 parts by mass of the liquid oligomer of the unsaturated hydrocarbon is preferably from 100 to 1000 parts by mass, more preferably from 120 to 500 parts by mass, and even more preferably from 150 to 250 parts by mass.

### Granular Activated Carbon

The oxygen absorber of the present invention contains granular activated carbon.

It is conceivable that the activated carbon in the oxygen absorber of the present invention has a function of suppressing the generation of odor, which is the effect of the present invention, and of also promoting an oxidation reaction of the liquid oligomer of the unsaturated hydrocarbon.

The granular activated carbon is preferably at least one selected from the group consisting of coconut shell activated carbon, coal activated carbon, and wood activated carbon, and is more preferably coconut shell activated carbon.

The properties of the granular activated carbon are not particularly limited, but from the perspective of handling ease when producing the oxygen absorber, a granular activated carbon having high fluidity is suitably used, and a granular activated carbon having a shape that is close to spherical is more preferable. In addition, from the perspective of handling ease when producing the oxygen absorber, the average particle size of the granular activated carbon is preferably from 0.01 mm to 2 mm, and more preferably from 0.1 mm to 1 mm. As long as the particles have a particle size in the range described above, any particles of the granular activated carbon can be used regardless of whether they are primary particles, agglomerated particles, a crushed material, or granules. The activated carbon having a particle size in the range described above can be used singly in one kind, or several kinds thereof having different particle sizes can be mixed in any ratio. The average particle size can be measured by, for example, a commercially available laser diffraction/scattering type particle size distribution measuring device ("LA-960", available from Horiba, Ltd.).

The content of the granular activated carbon in the oxygen absorber is preferably from 1 to 40 mass%, more preferably from 5 to 30 mass%, even more preferably from 10 to 25 mass%, and yet even more preferably from 10 to 20 mass%.

The mass ratio of the granular activated carbon to the liquid oligomer of the unsaturated hydrocarbon, that is, the mass ratio of [(granular activated carbon)/(liquid oligomer of an unsaturated hydrocarbon)] is preferably from 1/1 to 2/1, and more preferably from 1.2/1 to 1.8/1.

### Crystalline Thermoplastic Resin Particles

The oxygen absorber of the present invention contains crystalline thermoplastic resin particles.

As the oxygen absorber absorbs oxygen, the oxygen absorber generates heat and experiences an increase in temperature, and therefore depending on the product to be stored, deterioration due to localized heating may become a difficulty, or a difficulty such as swelling or deformation of the oxygen absorber package or packaging container may occur. In addition, there is also a possibility of local heating due to heat accumulation at the time of disposing of a large volume. Here, since the crystalline thermoplastic resin particles have a crystalline portion and a melting point, when the crystalline thermoplastic resin particles are added to the oxygen absorber, the heat of fusion is locally captured during melting, and the heat generation is suppressed.

The heat of fusion per unit mass of the thermoplastic resin that forms the crystalline thermoplastic resin particles is preferably 190 mJ/mg or greater. The melting point of the thermoplastic resin is preferably from 80 to 150°C.

The crystallinity of the thermoplastic resin that forms the crystalline thermoplastic resin particles is preferably 50% or greater, more preferably 60% or greater, and still more preferably 65% or greater.

The crystallinity of the thermoplastic resin is a value that is calculated by a density method.

Note that the heat of fusion, the melting point, and the crystallinity of the thermoplastic resin can be measured using, for example, a commercially available differential scanning calorimeter ("DSC-60A" available from Shimadzu Corporation).

The number average molecular weight of the thermoplastic resin forming the crystalline thermoplastic resin particles is preferably from 800 to 10000, and more preferably from 1000 to 3000.

Examples of the crystalline thermoplastic resin particles include polyolefin particles, polyester particles, and polyamide particles, and the crystalline thermoplastic resin particles are preferably polyolefin particles or polyester particles, and are more preferably polyolefin particles.

The polyolefin particles are preferably polyethylene particles or polypropylene particles, and are more preferably polyethylene particles.

The crystallinity of the polyethylene constituting the polyethylene particles is preferably 50% or greater, more preferably 60% or greater, and even more preferably 65% or greater.

The crystallinity of polyethylene is a value calculated by a density method [JIS K6760:1995 (withdrawn) and "Polyethylene Resins, Lecture on Plastic Materials", Nikkan Kogyo Shimbun, Ltd., 22 (1969)].

Since polyethylene is a crystalline polymer and the crystalline portion is structurally more stable than the amorphous portion, as the crystallinity increases, the density becomes higher, which is preferable. The polyethylene used in the present invention may be copolymerized with another monomer, such as propylene or 1-butene.

The heat of fusion per unit mass of the polyethylene is preferably 190 mJ/mg or more, and the melting point is preferably from 80°C to 150°C. The number average molecular weight is preferably from 1000 to 3000.

The content of the crystalline thermoplastic resin particles in the oxygen absorber is preferably from 3 to 50 mass%, more preferably from 5 to 40 mass%, and even more preferably from 10 to 30 mass%.

Some of the low molecular weight component contained in the crystalline thermoplastic resin particles may be adsorbed on the granular activated carbon. It is conceivable that as a result, the odor suppressing effect of the granular activated carbon is inhibited, and thus the amount of the low molecular weight component contained in the crystalline thermoplastic resin particles adsorbed on the granular activated carbon is preferably smaller. It is more preferable that the low molecular weight component of the crystalline thermoplastic resin particles is substantially not adsorbed by the granular activated carbon.

The amount of the low molecular weight component contained in the crystalline thermoplastic resin particles adsorbed on the granular activated carbon can be represented by a ratio [Cref/Pref] of a peak area (Cref) of a decomposition product of the low molecular weight component of the crystalline thermoplastic resin particles adsorbed on the granular activated carbon per unit mass of the activated carbon to a peak area (Pref) of the crystalline thermoplastic resin particle decomposition product per unit mass of the crystalline thermoplastic resin particles in an analysis curve derived by a pyrolysis-gas chromatography analysis under a pyrolysis condition of 600°C. A smaller value of the ratio [Cref/Pref] means that a smaller amount of the low molecular weight component contained in the crystalline thermoplastic resin particles is adsorbed on the granular activated carbon.

In the present invention, the ratio [Cref/Pref] of the peak area (Cref) of the decomposition product of the low molecular weight component of the crystalline thermoplastic resin particles adsorbed on the granular activated carbon per unit mass of the activated carbon to the peak area (Pref) of the crystalline thermoplastic resin particle decomposition product per unit mass of the crystalline thermoplastic resin particles is 0.20 or less, preferably 0.15 or less, more preferably 0.10 or less, even more preferably 0.09 or less, and yet even more preferably 0.08 or less. Further, for example, if the ratio [Cref/Pref] is 0.07 or less, it is conceivable that the low molecular weight component of the crystalline thermoplastic resin particles is not substantially adsorbed on the granular activated carbon, and thus the ratio [Cref/Pref] is particularly preferable 0.07 or less.

The ratio [Cref/Pref] is specifically determined in the following manner, and more specifically, can be determined by a method described in Examples.

A weighed sample of the crystalline thermoplastic resin particles is analyzed using a pyrolysis-gas chromatography mass spectrometer (pyrolysis GC-MS) set at a pyrolysis temperature of 600°C to determine the peak area derived from the crystalline thermoplastic resin particle decomposition product. The determined peak area is then divided by the mass of the sample of the crystalline thermoplastic resin particles to determine a peak area (Pref) of the crystalline thermoplastic resin particle decomposition product per unit mass of the crystalline thermoplastic resin particles.

Next, the granular activated carbon is separated from the oxygen absorber. The weighed sample of the granular activated carbon is analyzed using the pyrolysis-gas chromatography mass spectrometer (pyrolysis GC-MS) set at a pyrolysis temperature of 600°C to determine the peak area of the decomposition product of the low molecular weight component of the crystalline thermoplastic resin particles adsorbed on the granular activated carbon. The determined peak area is then divided by the mass of the sample of the granular activated carbon to determine the peak area (Cref) of the decomposition product of the low-molecular weight component of the crystalline thermoplastic resin particles adsorbed on the granular activated carbon per unit mass of the activated carbon.

The ratio [Cref/Pref] is determined from the peak areas derived by the above method.

Excellent oxygen absorption performance and suppression of odor generation can be achieved, and the generation of heat can be suppressed by setting the ratio [Cref/Pref] to within the range described above. The reason for this is not clear but is assumed to be as follows. It is conceivable that a low molecular weight component is present in the crystalline thermoplastic resin particles, and that the low molecular weight component migrates to the activated carbon side through contact with the granular activated carbon, volatilization, or the like. However, since the amount of the low molecular weight component adsorbed by the odor-adsorbing portion of the granular activated carbon is small, odor components can be sufficiently adsorbed on the granular activated carbon. At the same time, the activated carbon can exhibit a function of activating oxygen absorption, and therefore the activated carbon also exhibits an excellent oxygen absorption capability. Further, since the migration of the crystalline thermoplastic resin particles is small, heat generation can be suppressed. It is conceivable that the effects of the present invention are exhibited in this manner.

With regard to the ratio [Cref/Pref] of the peak area (Cref) of the decomposition product of the low molecular weight component of the crystalline thermoplastic resin particles adsorbed on the granular activated carbon per unit mass of the activated carbon to the peak area (Pref) of the crystalline thermoplastic resin particle decomposition product per unit mass of the crystalline thermoplastic resin particles, an example of a method in which the ratio [Cref/Pref] satisfies the above range is a method including: sealing, in a gas-barrier container filled with an inert gas, an air-permeable packaging material containing the oxygen absorber; and setting the pressure in the gas-barrier container preferably to 0.10 MPa or higher. A pressure of 0.10 MPa is nearly atmospheric pressure.

Examples of the inert gas include carbon dioxide and noble gases such as nitrogen and argon, and nitrogen is preferable.

The temperature during storage is preferably 70°C or lower, more preferably 60°C or lower, even more preferably 50°C or lower, and yet even more preferably 40°C or lower.

On the other hand, when the oxygen absorber is stored with the pressure in the gas-barrier container set to less than 0.10 MPa (stored under reduced pressure), the [Cref/Pref] ratio may not satisfy the abovementioned range, and in this case, the ability to suppress odor, which is an effect of the present invention, may decrease.

The mass ratio of the crystalline thermoplastic resin particles to the granular activated carbon in the oxygen absorber, that is, the mass ratio of [(crystalline thermoplastic resin particles)/(granular activated carbon)], is preferably from 0.5/1 to 2.0/1, more preferably from 1.0/1 to 2.0/1, even more preferably from 1.0/1 to 1.8/1, yet even more preferably from 1.0/1 to 1.5/1, and still even more preferably from 1.2/1 to 1.5/1.

The mass ratio of the crystalline thermoplastic resin particles to the liquid oligomer of the unsaturated hydrocarbon, that is, the mass ratio of [(crystalline thermoplastic resin particles)/(liquid oligomer of an unsaturated hydrocarbon)] is preferably from 0.75/1 to 5/1, more preferably from 1/1 to 4/1, and still more preferably from 1.5/1 to 3/1.

### Gas-Absorbing Inorganic Particles

In addition to the liquid oligomer of the unsaturated hydrocarbon, the transition metal catalyst, the carrier, the granular activated carbon, and the crystalline thermoplastic resin particles described above, the oxygen absorber of the present invention may contain other substances within a range that does not impair the effects of the present invention.

The oxygen absorber of the present invention may contain gas-absorbing inorganic particles. The gas-absorbing inorganic particles are mainly particles that absorb a gas other than oxygen, and specifically, are particles that absorb highly volatile low number-average molecular weight substances contained in the liquid oligomer of the unsaturated hydrocarbon before undergoing an oxygen absorption reaction with the liquid oligomer of the unsaturated hydrocarbon serving as the main agent, or gas components produced in the oxygen absorption reaction, such as hydrogen, carbon monoxide, carbon dioxide, hydrocarbons, aldehydes, ketones and carboxylic acids, and corrosive gas components such as hydrogen sulfide and ammonia in the closed atmosphere, and the gas-absorbing inorganic particles are particles that achieve this purpose.

Examples of the gas-absorbing inorganic particles include silicates having an average pore size of from 1 to 150 Å, oxides and hydroxides of alkaline earth metals, aluminum oxide, polymeric adsorbents, sodium sulfate, sodium carbonate, potassium carbonate, soda lime, organic acid salts, and organic amines.

Examples of the silicates having an average pore size of 1 to 150 Å include synthetic zeolites represented by molecular sieves; natural zeolites such as mordenite and erionite; clay minerals such as perlite, acid clay, and activated clay; porous glass such as silica gel; magnesium silicate; aluminum silicate; and ascarite. The silicate having an average pore size of from 1 to 150 Å is preferably a porous glass, and more preferably silica gel.

Examples of oxides of alkaline earth metals include calcium oxide, barium oxide, and magnesium oxide.

Examples of the alkaline earth metal hydroxides include sodium hydroxide, potassium hydroxide, and slaked lime.

The gas-absorbing inorganic particles are preferably at least one selected from the group consisting of silicates having an average pore size of 1 to 150 Å, oxides of alkaline earth metals, and hydroxides of alkaline earth metals, more preferably a silicate having an average pore size of 1 to 150 Å, even more preferably a silicate having an average pore size of 1 to 100 Å, and yet even more preferably silica gel.

An oxygen absorber that can absorb not only the gas and odors, but also moisture and that is suitable for the storage of products that dislike moisture can be produced by using a silicate having an average pore size of from 1 to 150 Å. In addition, silica gel is robust and highly safe and exhibits good handling properties and filling properties, and therefore silica gel is preferably used. The average pore size can be measured by the Brunauer-Emmett-Teller (BET) multipoint method or the like using, for example, a commercially available specific surface area/pore distribution measuring device ("BELSORP-Max" available from MicrotracBEL Corp.).

The average particle size of the gas-absorbing inorganic particles is preferably from 0.1 to 3 mm, more preferably from 0.2 to 1 mm, and even more preferably from 0.3 to 0.6 mm. The gas-absorbing inorganic particles having an average particle size in the above range may be appropriately selected from commercially available products, or may be prepared by classification using a sieve according to the desired average particle size. In addition, the average particle size can be measured by, for example, a commercially available laser diffraction/scattering type particle size distribution measuring device ("LA-960", available from Horiba, Ltd.).

Moreover, the bulk density of the gas-absorbing inorganic particles is preferably from 0.3 to 1.5 g/mL, more preferably from 0.4 to 1.0 g/mL, and even more preferably from 0.5 to 0.8 g/mL. Note that the bulk density can be measured in accordance with JIS K6721:1977 (withdrawn), for example.

The gas-absorbing inorganic particles are not necessarily a single substance, and may be a mixture of two or more types.

The content of the gas-absorbing inorganic particles in the oxygen absorber is preferably from 5 to 60 mass%, more preferably from 10 to 50 mass%, and even more preferably from 20 to 40 mass%.

The mass ratio of the liquid oligomer of the unsaturated hydrocarbon in the oxygen absorber to the gas-absorbing inorganic particles in the oxygen absorber, that is, the mass ratio of [(liquid oligomer of an unsaturated hydrocarbon)/(gas-absorbing inorganic particles)], is preferably from 10/90 to 30/70. and more preferably from 15/85 to 25/75.

### Method for Producing Oxygen Absorber

The method for producing the oxygen absorber of the present invention is not particularly limited, but is preferably a method in which a mixture of a liquid oligomer of an unsaturated hydrocarbon and a transition metal catalyst is supported on a carrier, after which the carrier, granular activated carbon, and crystalline thermoplastic resin particles are mixed to produce the oxygen absorber.

When the oxygen absorber further contains gas-absorbing inorganic particles, the gas-absorbing inorganic particles are preferably mixed simultaneously when the carrier, the granular activated carbon, and the crystalline thermoplastic resin particles are mixed. That is, when the oxygen absorber contains gas-absorbing inorganic particles, the method for producing the oxygen absorber of the present invention is preferably a method in which a mixture of the liquid oligomer of the unsaturated hydrocarbon and the transition metal catalyst is supported on a carrier, after which the carrier, the granular activated carbon, the crystalline thermoplastic resin particles, and the optional gas-absorbing inorganic particles are mixed to produce the oxygen absorber.

The device used for mixing is not particularly limited, and specific examples that can be used include a Nauta mixer (available from Hosokawa Micron Corporation), a conical mixer (available from Ono Kagaku Kikai K.K.), a vertical granulator (available from Powrex Corp.), and a high speed mixer (available from EarthTechnica Co., Ltd.).

### Oxygen Absorber Package

An oxygen absorber package of the present invention includes the oxygen absorber described above and an air-permeable packaging material containing the oxygen absorber.

That is, the oxygen absorber package of the present invention includes an oxygen absorber and an air-permeable packaging material containing the oxygen absorber. The oxygen absorber includes: a liquid oligomer of an unsaturated hydrocarbon; a transition metal catalyst; a carrier supporting the liquid oligomer of the unsaturated hydrocarbon and the transition metal catalyst; granular activated carbon; and crystalline thermoplastic resin particles. The oxygen absorber is such that in an analysis curve derived by subjecting the crystalline thermoplastic resin particles and the granular activated carbon to a pyrolysis-gas chromatography analysis under a pyrolysis condition of 600°C, a ratio [Cref/Pref] of a peak area (Cref) of a decomposition product of a low molecular weight component of the crystalline thermoplastic resin particles adsorbed on the granular activated carbon per unit mass of the activated carbon to a peak area (Pref) of the crystalline thermoplastic resin particle decomposition product per unit mass of the crystalline thermoplastic resin particles is 0.20 or less.

The term "air-permeable packaging material" as used herein refers to an entire packaging material that can contain the oxygen absorber and has air permeability.

### Air-Permeable Packaging Material

The shape of the air-permeable packaging material is preferably at least one selected from the group consisting of a bag shape, a three-sided seal shape, a four-sided seal shape, a stick shape, a cylindrical shape, and a box shape, and is more preferably at least one selected from the group consisting of a stick shape, a cylindrical shape, and a box shape.

Specific examples of the air-permeable packaging material include a packaging material having a bag shape formed by bonding two sheets of an air-permeable packaging material to each other, a packaging material having a bag shape formed by bonding one sheet of an air-permeable packaging material and one sheet of a non-air-permeable packaging material to each other, and a packaging material having a bag shape formed by folding one sheet of an air-permeable packaging material and sealing edges other than the folded portion.

Here, when the air-permeable packaging material and the non-air-permeable packaging material each have a quadrilateral shape, examples of the packaging material include a packaging material having a bag shape formed by overlapping two sheets of an air-permeable packaging material and heat-sealing the four sides, a packaging material having a bag shape formed by overlapping one sheet of an air-permeable packaging material and one sheet of a non-air-permeable packaging material and heat-sealing the four sides, and a packaging material having a bag shape formed by folding one sheet of an air-permeable packaging material and heat-sealing the three sides other than the folded portion. Furthermore, the packaging material may be a packaging material having a bag shape formed by forming an air-permeable packaging material into a tubular shape and heat-sealing both ends and the trunk portion of the resulting tubular body.

### Air-Permeable Packaging Material

As the air-permeable packaging material, a packaging material through which oxygen and water vapor permeate is selected. Of these, a packaging material having an air permeability resistance not greater than 600 seconds, more preferably not greater than 90 seconds by a Gurley tester method is suitably used. Here, the air permeability resistance refers to a value measured by a method in accordance with JIS P 8117 (1998). More specifically, the air permeability resistance refers to a time period required for 100 mL of air to permeate through an air-permeable packaging material as determined using a Gurley densometer (available from Toyo Seiki Seisaku-sho, Ltd.).

As the air-permeable packaging material, in addition to paper and nonwoven fabrics, a plastic film to which air permeability has been imparted may be used. Examples of such a plastic film include a laminate film produced by laminating and bonding a film of polyethylene terephthalate, polyamide, polypropylene, polycarbonate, or the like, and a film of polyethylene, an ionomer, polybutadiene, ethylene acrylic acid copolymer, ethylene methacrylate copolymer, ethylene vinyl acetate copolymer, or the like as a sealing layer. These laminates can also be used as the air-permeable packaging material.

As the method of imparting air permeability, various methods can be employed, in addition to punching with a cold needle or a heat needle. When air permeability is imparted by punching, the air permeability can be freely adjusted by a diameter, the number, a material, and the like of holes to be punched.

The thickness of the laminated film is preferably from 50 to 1000 µm, more preferably from 50 to 500 µm, and particularly preferably from 60 to 250 µm. In this case, as compared to a case where the thickness deviates from the range described above, the packaging material can be a packaging material that retains strength and has an excellent heat sealing property and packaging suitability.

In another embodiment of the oxygen absorber package of the present invention, the air-permeable packaging material is further sealed in a gas-barrier container filled with an inert gas. That is, in another embodiment of the oxygen absorber package of the present invention, the air-permeable packaging material containing the above-described oxygen absorber is sealed in a gas-barrier container filled with an inert gas.

The air-permeable packaging material containing the oxygen absorber is used as a so-called oxygen scavenger, and the gas-barrier container is used for packaging products such as pharmaceuticals, medical supplies, and sanitary products. In the present embodiment, the oxygen scavenger and a product are simultaneously accommodated in the gas-barrier container and sealed.

The gas-barrier container is made of a packaging material having gas-barrier properties, and is preferably a container produced using, as the raw material of the packaging material having gas-barrier properties, for example, a polyamide resin, a vapor-deposited film produced by vapor-depositing a metal or a metal oxide on a polyester, or a polyvinyl alcohol resin.

Further, the pressure in the gas-barrier container of the oxygen absorber package of the present invention is preferably 0.10 MPa or higher. The pressure of 0.10 MPa is nearly atmospheric pressure. When the pressure is set to 0.10 MPa or higher, migration of the crystalline thermoplastic resin particle components to the granular activated carbon can be prevented, and the effect of the present invention can be exhibited.

### Method for Storing Oxygen Absorber

A method for storing the oxygen absorber of the present invention includes sealing, in a gas-barrier container filled with an inert gas, the air-permeable packaging material containing the oxygen absorber, and setting the pressure in the gas-barrier container to preferably 0.10 MPa or higher. The pressure of 0.10 MPa is nearly atmospheric pressure.

Examples of the inert gas used in the storing method include carbon dioxide and noble gases such as nitrogen and argon, and nitrogen is preferable.

The pressure in the gas-barrier container is preferably 0.10 MPa or higher.

In the storage method of the present invention, the temperature during storage is preferably 70°C or lower, more preferably 60°C or lower, even more preferably 50°C or lower, and yet even more preferably 40°C or lower. The lower limit of the storage temperature is not particularly limited, but is, for example, -20°C or higher. By storing the oxygen absorber at a low temperature in an inert gas, migration of the crystalline thermoplastic resin particle component to the granular activated carbon can be prevented, and the effect of the present invention can be exhibited. Therefore, even after storage, the oxygen absorber can exhibit excellent oxygen absorption performance and suppress the generation of odors.

On the other hand, when the oxygen absorber is stored with the pressure in the gas-barrier container set to less than 0.10 MPa (stored under reduced pressure), the [Cref/Pref] ratio may not satisfy the abovementioned range, and in this case, the ability to suppress odor, which is an effect of the present invention, may decrease.

### EXAMPLES

Hereinafter, the present embodiment will be described in detail using Examples and Comparative Examples, but the present embodiment can be modified as appropriate as long as the present embodiment achieves the effects of the present invention. Note that "parts" in Examples and Comparative Examples refer to parts by mass when not specifically stated.

### Analysis and Evaluation

Ratio [Cref/Pref] of a Peak Area (Cref) of Decomposition Product of Low-Molecular Weight Component of Crystalline Thermoplastic Resin Particles Adsorbed on Granular Activated Carbon Per Unit Mass of Activated Carbon to Peak Area (Pref) of Crystalline Thermoplastic Resin Particle Decomposition Product Per Unit Mass of Crystalline Thermoplastic Resin Particles
0.166 mg of powdered polyethylene (crystallinity 65%, melting point 107°C, average molecular weight 2000; used in each example) was analyzed under the following analysis conditions using a pyrolysis GC-MS (pyrolysis device: EGA/PY-3030D available from Frontier Laboratories Ltd, GC-MS device: Agilent 7890A/5975C inert XL MSD with TAD).

Peaks derived from a powdered polyethylene decomposition product were detected during a retention time from 0 to 20.0 minutes. A value calculated by dividing the total area of the peaks by the 0.166 mg of the sample amount was defined as the peak area (Pref) of the crystalline thermoplastic resin particle decomposition product per unit mass of the crystalline thermoplastic resin particles.

Next, the oxygen absorber packages of the Examples and Comparative Examples were each opened, and approximately 0.3 mg of the granular activated carbon was separated from the oxygen absorber and analyzed under the following analysis conditions using the pyrolysis GC-MS device.

Peaks derived from a low molecular weight component decomposition product of the powdered polyethylene adsorbed on the granular activated carbon were detected during a retention time from 0 to 20.0 minutes. A value calculated by dividing the total area of the peaks by the amount of the sample was defined as the peak area (Cref) of the decomposition product of the low-molecular weight component of the crystalline thermoplastic resin particles adsorbed on the granular activated carbon per unit mass of the activated carbon.

The ratio [Cref/Pref] was determined from the peak areas obtained by the above method.
Analysis Conditions
Carrier gas: helium
Thermal decomposition temperature: 600°C
Column type: DB-5MS UI (length 30 m, inner diameter 0.25 mm, film thickness 0.5 µm)
Temperature increase conditions: Hold at 40°C for 2 minutes, increase the temperature at a rate of 20°C/min, and then hold at 320°C for 5 minutes
Ionization method: EI⁺
Detector temperature: 320°C
Split ratio: 50:1
Mass scan range m/Z: 33 to 700

### Oxygen Absorption Performance Test

After storage, one oxygen absorber package produced in the Examples and Comparative Examples was removed from an aluminum foil-laminated plastic film bag (available from Sun A Kaken Co., Ltd.: size 220 mm × 300 mm, hereinafter referred to as an "aluminum barrier bag"), and was then enclosed in a separate aluminum barrier bag (same as above) together with 500 mL of 25°C air. The oxygen concentration (initial oxygen concentration) in the aluminum barrier bag was measured at this time. The bag was stored at 25°C, and after 10 days, the oxygen concentration in the aluminum barrier bag (oxygen concentration after storage) was measured, and the oxygen reduction amount (initial oxygen concentration - oxygen concentration after storage) was calculated. A greater oxygen reduction amount indicates more excellent oxygen absorption performance.

The oxygen concentration was measured using a gas analyzer ("Check Mate 3" available from MOCON, Inc.). The oxygen concentration was measured by inserting a hollow needle located at the tip of a sampling tube made of silicon and attached to the gas analyzer into the aluminum barrier bag from a sampling rubber sheet attached in advance to the aluminum barrier bag, and then measuring the oxygen concentration.

### Odor Test

Three odor evaluation panelists smelled the odor in the aluminum barrier bag after the oxygen absorption performance test, and determined the intensity of the odor generated from the oxygen absorber using a six-step odor method (according to the following criteria). Table 1 shows the average value (rounded to the nearest whole number) of the evaluation scores by the three evaluation panelists.
0: Odorless
1: Barely perceptible odor (detection threshold)
2: Weak odor that can be identified (recognition threshold)
3: Easily detectable odor (tolerable odor)
4: Strong odor (unbearable odor)
5: Intense odor (very unbearable odor)

In the examples, a score of 2 or less is acceptable, and a smaller score indicates a more excellent odor suppressing effect.

### Production of Oxygen Absorber and Oxygen Absorber Package

### Example 1

18.4 g of a liquid butadiene oligomer (Polyvest 110: available from Evonik Japan Co., Ltd.) and 1.6 g of 4 mass% tall oil fatty acid manganese/tall oil fatty acid (available from Toei Chemical Industry Co., Ltd.) were mixed to produce a homogeneous solution. This solution was impregnated into 40.8 g of diatomaceous earth (catalog values: particle size of 1 mm, bulk density from 0.5 to 0.6 g/mL).

Next, the diatomaceous earth impregnated with the above solution, 30.4 g of granular activated carbon (coconut shell-type activated carbon, catalog values: particle size from 0.25 to 0.85 mm), and 32.0 g of powdered polyethylene (catalog values: crystallinity of 65%, melting point of 107°C, number average molecular weight of 2000) were inserted into a nitrogen-purged container and mixed by shaking by hand, and an oxygen absorber was produced.

Next, the exothermic behavior of the resulting oxygen absorber was evaluated. 60.0 g of the resulting oxygen absorber was weighed into a 200 mL beaker and heated in a water bath at 60°C, and the temperature at the center of the oxygen absorber was measured with a thermocouple. The temperature gradually increased to 54°C over 4 hours, after which the temperature began to gradually decrease, and thus the measurements were stopped. From this result, it was found that even when the sample was left sitting in an air environment at 60°C, self-heating did not occur, and heat generation could be suppressed.

### Example 2

18.4 g of a liquid butadiene oligomer (Polyvest 110: available from Evonik Japan Co., Ltd.) and 1.6 g of 4 mass% tall oil fatty acid manganese/tall oil fatty acid (available from Toei Chemical Industry Co., Ltd.) were mixed to produce a homogeneous solution. This solution was impregnated into 40.8 g of diatomaceous earth (catalog values: particle size of 1 mm, bulk density from 0.5 to 0.6 g/mL).

Next, the diatomaceous earth impregnated with the above solution, 30.4 g of granular activated carbon (coconut shell-type activated carbon, catalog values: particle size from 0.25 to 0.85 mm), 68.8 g of silica gel particles (catalog values: particle size from 20 to 40 mesh, bulk density of 0.74 g/mL, average pore size of 24 Å), and 40.0 g of powdered polyethylene (catalog values: crystallinity of 65%, melting point of 107°C, number average molecular weight of 2000) were mixed, and an oxygen absorber was produced.

Next, the exothermic behavior of the resulting oxygen absorber was evaluated. 60.0 g of the resulting oxygen absorber was weighed into a 200 mL beaker and heated in a water bath at 60°C, and the temperature at the center of the oxygen absorber was measured with a thermocouple. The temperature gradually increased to 54°C over 4 hours, after which the temperature began to gradually decrease, and thus the measurements were stopped. From this result, it was found that even when the sample was left sitting in an air environment at 60° C, self-heating did not occur, and heat generation could be suppressed.

### Comparative Example 1

An oxygen absorber was produced in the same manner as in Example 1 except that the 32.0 g of powdered polyethylene (catalog values: crystallinity of 65%, melting point of 107°C, number average molecular weight of 2000) used in Example 1 was not mixed.

Next, the exothermic behavior of the resulting oxygen absorber was evaluated. An amount of 60.0 g of the resulting oxygen absorber was weighed into a 200 mL beaker and heated in a water bath at 60°C, and the temperature at the center of the oxygen absorber was measured with a thermocouple. The temperature gradually increased, and when the temperature exceeded 150°C after 3 hours, the measurements were stopped. From this result, it was found that when the sample was left sitting in an air environment at 60°C, self-heating occurred, and heat generation could not be suppressed.

### Example 3

A small bag (air-permeable packaging material) of a packaging material having air permeability (laminated film of paper/open-pore polyethylene, thickness: 0.4 mm, size: 26 mm × 62 mm, air permeation resistance: 27 seconds) was filled with 2.5 g of the oxygen absorber produced in Example 2, after which the periphery of the small bag was heat sealed to produce an oxygen absorber package (air-permeable packaging material containing the oxygen absorber).

The oxygen absorber package was placed in a nitrogen-purged aluminum barrier bag and sealed, and then stored at normal pressure (0.10 MPa) and 25°C for 30 days.

### Example 4

An oxygen absorber package was manufactured in the same manner as in Example 3. The resulting oxygen absorber package was placed in a nitrogen-purged aluminum barrier bag and sealed, and then stored at normal pressure (0.10 MPa) and 60°C for 180 days.

### Comparative Example 2

An oxygen absorber package was manufactured in the same manner as in Example 3. The resulting oxygen absorber package was placed in a nitrogen-purged aluminum barrier bag, and sealed in an evacuated state at 0.01 MPa using a vacuum filling sealer ("FG-400E" available from Fuji Impulse Co., Ltd.). Subsequently, the sealed oxygen absorber package was stored at 60°C for 180 days.

### Comparative Example 3

An oxygen absorber package was manufactured in the same manner as in Example 3. The resulting oxygen absorber package was placed in a nitrogen-purged aluminum barrier bag, and then sealed in an evacuated state at 0.07 MPa using a vacuum filling sealer (same as above). The sealed oxygen absorber package was then stored at 25°C for 30 days.

### [Table 1]

**Table 1**

| | Storage conditions | | | [Cref/Pref]^{*)} | Evaluation results | |
|---|---|---|---|---|---|---|
| | Pressure | Temperature | Period | Ratio of peak of PE component decomposition product adsorbed on activated carbon to peak of PE decomposition product | Oxygen absorption performance test (oxygen reduction amount) (mL) | Odor test (6-step odor method) |
| Example 3 | 0.10 MPa (normal pressure) | 25°C | 30 days | 0.07 | 71.6 | 0 |
| Example 4 | 0.10 MPa (normal pressure) | 60°C | 180 days | 0.11 | 63.6 | 1 |
| Comparative Example 2 | 0.01 MPa | 60°C | 180 days | 0.49 | 63.3 | 5 |
| Comparative Example 3 | 0.07 MPa | 25°C | 30 days | 0.28 | 79.5 | 3 |

| | | | | | | |
|---|---|---|---|---|---|---|
| *) Ratio of the peak area (Cref) of a decomposition product of the low molecular weight component of the crystalline thermoplastic resin particles adsorbed on the granular activated carbon per unit mass of the activated carbon to the peak area (Pref) of the crystalline thermoplastic resin particle decomposition product per unit mass of the crystalline thermoplastic resin particles (In the table, PE denotes powdered polyethylene.) | | | | | | |

As is clear from the evaluation results on the exothermic behavior and the results in Table 1, the oxygen absorbers of the Examples exhibit excellent oxygen absorption performance without requiring moisture, can suppress the generation of heat, and can also suppress the generation of odors. Therefore, the oxygen absorber of the present invention can be suitably used particularly in the storage of pharmaceuticals, medical supplies, sanitary supplies, and the like.

## Claims

1. An oxygen absorber comprising:
a liquid oligomer of an unsaturated hydrocarbon;
a transition metal catalyst;
a carrier supporting the liquid oligomer of the unsaturated hydrocarbon and the transition metal catalyst;
granular activated carbon; and
crystalline thermoplastic resin particles, wherein
in an analysis curve derived by subjecting the crystalline thermoplastic resin particles and the granular activated carbon to a pyrolysis-gas chromatography analysis under a pyrolysis condition of 600°C, a ratio [Cref/Pref] of a peak area (Cref) of a decomposition product of a low molecular weight component of the crystalline thermoplastic resin particles adsorbed on the granular activated carbon per unit mass of the activated carbon to a peak area (Pref) of the crystalline thermoplastic resin particle decomposition product per unit mass of the crystalline thermoplastic resin particles is 0.20 or less.

2. The oxygen absorber according to claim 1, wherein a thermoplastic resin forming the crystalline thermoplastic resin particles has a melting point of 80 to 150°C and a crystallinity of 60% or higher.

3. The oxygen absorber according to claim 1 or 2, wherein the crystalline thermoplastic resin particles are polyethylene particles.

4. The oxygen absorber according to any one of claims 1 to 3, wherein the granular activated carbon is coconut shell activated carbon.

5. The oxygen absorber according to any one of claims 1 to 4, wherein a mass ratio of the crystalline thermoplastic resin particles to the liquid oligomer of the unsaturated hydrocarbon, that is, a mass ratio of [(crystalline thermoplastic resin particles)/(liquid oligomer of unsaturated hydrocarbon)], is from 0.75/1 to 5/1.

6. The oxygen absorber according to any one of claims 1 to 5, wherein a mass ratio of the granular activated carbon to the liquid oligomer of the unsaturated hydrocarbon, that is, a mass ratio of [(granular activated carbon)/(liquid oligomer of an unsaturated hydrocarbon)] is from 1/1 to 2/1.

7. The oxygen absorber according to any one of claims 1 to 6, wherein a mass ratio of the crystalline thermoplastic resin particles to the granular activated carbon, that is, a mass ratio of [(crystalline thermoplastic resin particles)/(granular activated carbon)], is from 1/1 to 2/1.

8. The oxygen absorber according to any one of claims 1 to 7, wherein the liquid oligomer of the unsaturated hydrocarbon is at least one type selected from the group consisting of a liquid butadiene-based oligomer, a liquid isoprene-based oligomer, a liquid acetylene-based oligomer, and a liquid chloroprene-based oligomer.

9. The oxygen absorber according to any one of claims 1 to 8, wherein the transition metal catalyst is a transition metal salt.

10. The oxygen absorber according to any one of claims 1 to 9, wherein the carrier is porous inorganic particles having a bulk density of 0.6 g/cm³ or less.

11. The oxygen absorber according to any one of claims 1 to 10, wherein the carrier is a silicate.

12. The oxygen absorber according to any one of claims 1 to 11, wherein the carrier is diatomaceous earth.

13. The oxygen absorber according to any one of claims 1 to 12, wherein the low molecular weight component of the crystalline thermoplastic resin particles is substantially not adsorbed on the granular activated carbon.

14. An oxygen absorber package comprising the oxygen absorber described in any one of claims 1 to 13 and an air-permeable packaging material containing the oxygen absorber.

15. The oxygen absorber package according to claim 14, wherein the shape of the air-permeable packaging material is at least one selected from the group consisting of a bag shape, a three-sided seal shape, a four-sided seal shape, a stick shape, a cylindrical shape, and a box shape.

16. The oxygen absorber package according to claim 14 or 15, wherein the air-permeable packaging material is sealed in a gas-barrier container filled with an inert gas.

17. The oxygen absorber package according to claim 16, wherein the pressure in the gas-barrier container is 0.10 MPa or greater.

18. A method for storing the oxygen absorber described in any one of claims 1 to 13, the method comprising:
sealing, in a gas-barrier container filled with an inert gas, an air-permeable packaging material containing the oxygen absorber; and
setting the pressure inside the gas-barrier container to 0.10 MPa or higher.
